(19) **Europäisches Patentamt**

**European Patent Office**

**Office européen des brevets**

(11) **EP 1 355 233 B1**

(12) **FASCICULE DE BREVET EUROPEEN**

(45) Date de publication et mention de la délivrance du brevet:
**29.06.2005 Bulletin 2005/26**

(51) Int Cl.⁷: **G06F 9/46**, H04L 29/06

(21) Numéro de dépôt: **03007941.2**

(22) Date de dépôt: **09.04.2003**

(54) **Procédé et système d'allocation d'une ressource en temps réel entre plusieurs entités**

Verfahren und System für Ressourcenallokation in Echtzeit zwischen mehreren Einheiten

Method and system for resource allocation in real-time between several entities

(84) Etats contractants désignés:
**AT BE BG CH CY CZ DE DK EE ES FI FR GB GR HU IE IT LI LU MC NL PT RO SE SI SK TR**

(30) Priorité: **15.04.2002 FR 0204654**

(43) Date de publication de la demande:
**22.10.2003 Bulletin 2003/43**

(73) Titulaire: **FRANCE TELECOM**
**75015 Paris (FR)**

(72) Inventeur: **Delenda, Arnaud**
**75015 Paris (FR)**

(74) Mandataire: **Vannini, Torquato**
**A.P.I. Conseil,**
**Rue M. Dormoy**
**64000 Pau (FR)**

(56) Documents cités:
**WO-A-01/93033**  **US-A- 5 442 634**
**US-A- 6 005 852**

**Description**

DOMAINE DE L'INVENTION.

L'invention concerne un procédé et un système pour allouer en temps réel une ressource quantitativement divisible entre plusieurs entités.

Pour simplifier le vocabulaire on dénomme dans la suite par entité tout agent logique c'est-à-dire agent logiciel ou automate apte à mettre en oeuvre une procédure automatique de participation à la demande d'une ressource à travers un réseau de télécommunication.

L'entité qui requiert une ressource est l'entité utilisatrice du système d'allocation. Cette entité agit par l'intermédiaire de son automate (ou logiciel).

L'entité qui détient la ressource est l'entité fournisseur. Dans le cas d'une ressource de télécommunication le fournisseur peut être l'opérateur de télécommunication par exemple.

Le système de gestion de la ressource est une entité placée entre les entités utilisatrice et les entités fournisseurs, connectée au réseau de télécommunication.

Cette troisième entité est réalisée par tout agent logique c'est-à-dire agent logiciel ou automate apte à mettre en oeuvre une procédure automatique de traitement des requêtes reçues à un instant donné en vue d'allouer une quantité de ressource déterminée par le calcul, aux entités utilisatrices du système.

L'invention s'applique donc à tout système d'allocation d'une ressource divisible quantitativement dès lors que cette ressource est limitée en quantité et qu'une ou plusieurs entités requièrent à un moment donné une certaine quantité de cette ressource et que la demande globale dépasse l'offre offerte par l'entité fournisseur.

En effet, que cela soit au niveau d'un système de gestion d'un réseau de télécommunication ou d'un équipement partagé par plusieurs entités, il se pose le problème du partage des ressources fournies par ce système ou cet équipement entre ses différentes entités et de la mise en oeuvre du mécanisme de requête pour l'allocation.

L'une des difficultés que doit résoudre un tel mécanisme est d'effectuer un arbitrage entre les différentes entités utilisatrices dés lors que la demande cumulée pour ces différentes entités dépasse le volume total de ressource disponible (à savoir l'offre). Lorsque, la quantité de ressource correspondant à toutes les demandes émises par les entités utilisatrices reste inférieure à l'offre, le système peut allouer aux entités la totalité de ce qu'elles ont demandé et il n'y a pas de problème.

ETAT DE LA TECHNIQUE ANTERIEURE.

De nombreuses techniques existent à ce jour pour réaliser l'allocation de ressources :

- on peut signaler d'abord tous les mécanismes qui fonctionnent à partir de l'ordre d'arrivée : FIFO, LIFO, ... Pour un mécanisme FIFO (First In First Out), ce sont les entités ayant formulé le plus tôt leur demande qui sont servies en premier. Pour un mécanisme LIFO (Last In First Out) c'est au contraire le dernier à avoir formulé une demande qui est servi.

- il existe également d'autres mécanismes qui n'excluent aucune entité : l'arbitrage s'effectue au niveau de la quantité de ressource allouée à chaque entité. Comme règle d'arbitrage on utilise par exemple une règle définissant les quantités allouées au prorata des quantités demandées. On pourra se reporter à l'état de la technique que constitue le document D1 - US-A-6 005 852 -

Ces mécanismes ne sont pas toujours très efficaces d'un point de vue économique. En effet, l'adéquation entre l'offre (la quantité offerte) et la demande (quantités désirées ou obtenues) peut être difficile à obtenir.

Avec de tels mécanismes, il existe des périodes creuses où la demande reste plus faible que la quantité de ressource disponible et des périodes chargées où la demande excède très largement les ressources disponibles.

De plus ces mécanismes sont relativement statiques. Ils ne sont pas capables de s'adapter et de rester pertinents lorsque l'offre et la demande de ressource de la part des entités clientes subissent de fortes et rapides fluctuations.

Une solution possible pour satisfaire ce critère d'efficacité et d'adaptabilité du processus d'allocation de ressource, est d'utiliser une technique d'allocation basée sur des mécanismes de type marché et plus spécifiquement de type enchères multi-unitaires (la ressource est divisible): la ressource que l'on considère est constituée de plusieurs unités.

On peut citer à titre d'exemple la théorie développée par Klemperer (Klemperer P., *Auction Theory: A Guide to the Litterature*, Journal of Economic Surveys, **13** (3), 227-86, 1999).

Malheureusement, la plupart des travaux effectués et référencés pour des demandes sous forme d'enchères multi-unitaires ne concernent que des propriétés théoriques.

Quelques autres travaux portent sur des demandes sous forme d'enchères qui se sont déroulées en général à l'instigation des organismes publics ou de régulation au cours desquelles certaines ressources rares ou droits d'usage ont été offertes : un exemple remarquable concerne les droits d'exploitation des fréquences de radio-télécommunication : fréquences GSM ou UMTS.

Dans un cas comme dans l'autre, il n'y a pas de mécanisme concret de gestion qui soit proposé pour commander le processus d'allocation de la ressource.

On ne connaît à ce jour qu'un seul processus concret répondant au problème auquel le déposant s'est intéressé.

Il s'agit d'un mécanisme de demande sous forme d'enchère que l'on dénommera dans la suite par « PSP » acronyme de « Progressive Second Price » proposé et testé numériquement par Nemo Semret : Semret N., *Market Mechanisms for Network Ressource Sharing*,Philosophy Doctorate à Columbia, **1999**, à l'occasion d'un travail de thèse à l'Université de Columbia en 1999. Cette technique « PSP » est un mécanisme de gestion des demandes se présentant sous la forme d'enchères. Cette technique cherche à généraliser le principe de Vickrey au cas d'une ressource multi-unitaire.

Selon cette technique de gestion on utilise en outre une mise en oeuvre du principe d'exclusion compensation pour le calcul de la grandeur variable dans le temps (ou variable) à un instant donné.

Un demandeur participant à une demande et qui obtient une certaine quantité de ressource paie pour une valeur de la variable qu'étaient prêts à accorder ceux à qui il a fait perdre par sa présence une certaine quantité de ressource.

La totalité de cette quantité correspond au plus à la quantité qu'il a obtenue. Ce sont, bien entendu les «participants» ayant proposé les valeurs les plus élevées pour la variable qui obtiennent la ressource.

Le mécanisme d'enchère PSP pour l'allocation d'une ressource, a donné lieu à une demande de brevet publiée 28 septembre 2000 sous le numéro WO 00/57323.

Le mécanisme d'allocation d'une ressource, défini par les enchères PSP tel que décrit dans cette demande s'effectue au travers d'un processus de négociation itératif entre les trois entités chacune caractérisée par des objectifs distincts :

- l'agent logique fournisseur de la ressource qui cherche à fournir cette ressource selon des critères prédéfinis pour une valeur de la variable la plus élevée possible,
- des agents logiques demandeurs qui eux souhaitent obtenir une certaine quantité de cette ressource selon leurs propres critères prédéfinis aux meilleures conditions. Une meilleure condition est caractérisée par un couple (quantité, valeur de la grandeur) qui dépend de chaque demandeur.
- l'agent logique de gestion de l'allocation dont l'objectif est de réussir à satisfaire au mieux les deux précédentes classes d'entités.

Le rôle de l'agent logique de gestion de l'allocation peut être tenu par le fournisseur de la ressource.

En théorie, le mécanisme d'enchère PSP, aboutit bien à un équilibre, mais présente des inconvénients.

Tout d'abord la vitesse de convergence n'est pas très satisfaisante : même en supposant un nombre constant d'entités participant pendant une durée déterminée à une demande (c'est-à-dire dans le cas d'espèce pendant une demande type enchère), il faut beaucoup d'itérations au processus de gestion d'allocation pour atteindre l'équilibre vérifiant la satisfaction maximale de toutes les entités qui sont présentes lors de cette demande.

D'une manière opérationnelle, ce défaut de convergence se traduit :

- soit par une volumétrie de messages importante entre les entités qui participent à une demande et l'entité de gestion de l'allocation. Ceci entraîne un trafic de signalisation important dans le système. Ceci entraîne également beaucoup de calculs effectués par les entités participant et l'entité fournisseur dans le cas où l'on décide d'augmenter la fréquence d'itérations afin d'atteindre plus rapidement l'équilibre,
- soit par une dégradation du processus par rapport à son équilibre optimal si on limite la fréquence des ré-émissions de demandes assorties de nouvelles conditions (quantité, valeur de la grandeur), (toutes les minutes ou plus). Les entités participant ne peuvent renvoyer de nouvelles demandes avec de nouvelles conditions avant ce délai minimal.

Dans le cas d'un fonctionnement en mode dynamique, les entités utilisatrice du système peuvent entrer et sortir du système d'allocation en continue, le temps entre deux traitements des demandes assorties de nouvelles conditions peut devenir du même ordre de grandeur que le temps moyen entre l'arrivée ou le départ d'une nouvelle entité.

Dans ces conditions le processus de traitement itératif de PSP n'atteint jamais l'équilibre de satisfaction maximale des entités utilisatrices du système de gestion d'allocation de ressources. Ce système est en permanence dans un état transitoire possiblement éloigné de l'état d'équilibre optimal.

En outre un autre inconvénient, est que le processus PSP tel que décrit par Nemo Semret permet que des entités utilisatrices forment une coalition pour imposer des conditions qui leur sont favorables.

Ces deux inconvénients sont occasionnés par le caractère itératif du mécanisme et sont particulièrement ennuyeux vis-à-vis de l'impartialité que doit impérieusement respecter tout mécanisme d'allocation de ressource respectant des régles prédéterminées.

L'INVENTION.

La présente invention a pour but de proposer un procédé et un système n'ayant pas les inconvénients de l'état de la technique.

Selon l'invention l'étape de détermination de la quantité de ressource allouée à chaque agent logique utilisateur est réalisé après traitement de la demande à un instant donné, dans laquelle une seule requête est émise par chaque entité intervenant dans une période déterminée.

L'invention concerne plus particulièrement un procédé d'allocation d'une ressource entre n entités ou agents logiques demandeurs de la ressource, au moyen d'un système de gestion de la dite ressource, principalement caractérisé en ce qu'il comprend, sur une durée prédéterminée :

- la réception d'une requête émise par chaque agent demandeur sous la forme d'une fonction de demande de ressource $s_i(p)$, dans lesquelles p est une grandeur variable, ces fonctions de demande étant des fonctions prédéfinies positives décroissantes et continues,
- le traitement de toutes les requêtes reçues pendant la durée prédéterminée, pour déterminer la quantité de ressource à allouer à chaque agent demandeur, ce traitement comportant les étapes suivantes :
- le calcul d'une donnée correspondant à une grandeur dite grandeur d'équilibre $p^*$ à partir de la somme S des n fonctions de demande $s_i(p)$,

     au moyen de la relation : $S(p^*)=Q$,

- dans laquelle Q est la donnée quantité disponible, et
- $S(p)$ est la demande totale correspondant à la somme des demandes $s_i(p)$ de chaque agent pour chaque valeur que peut prendre la grandeur p,

$$S(p)= s_1(p) +s_2(p) +...+s_i(p)+...+s_n(p),$$

- le calcul des données correspondant à la quantité $a_i$ à allouer pour cette grandeur d'équilibre $p^*$ à chaque agent i à partir de sa fonction de demande $s_i$ telle que :

- $a_i = s_i (p^*)$,

- l'utilisation par le système de gestion, des données obtenues par le calcul pour allouer les quantités de ressources correspondantes et l'enregistrement de ces données pour les fournir à un système d'exploitation.

Selon une autre caractéristique, il consiste à programmer la fonction de demande $s_i(p)$ dans chaque agent logique demandeur.

Selon un autre caractéristique, il consiste :

- à programmer une fonction $U'_i(q)$ dans l'agent logique demandeur i,

     chaque agent demandeur i participant pendant la durée prédéterminée, étant ainsi caractérisé par son intérêt pour l'obtention d'une quantité q de la ressource globale Q, par sa fonction d'utilité $U_i(q)$ ou par une fonction d'utilité marginale $U'_i(q)$ accordée pour l'acquisition d'une unité supplémentaire, $U'_i(q)$ étant la dérivée de $U_i(q)$,
     et à chaque nouvelle participation :

- à déterminer la fonction de demande $s_i (p)$ en calculant la fonction inverse de la fonction $U'_i(q)$, l'agent logique demandeur émettant sa requête en envoyant cette fonction.

Selon une autre caractéristique, la fourniture de la fonction de demande consiste à envoyer au système de gestion, des données correspondant à m paramètres caractérisant cette fonction de demande.

Selon une autre caractéristique, la fonction d'utilité est une fonction polynomiale de la forme :

$$U(q) = \frac{\min(q, q_{max})^*(q_{max} - 0.5^*\min(q, q_{max}))}{\alpha}$$

ce qui donne une fonction de demande S(p)

$$S(p) = \max(0 \, ; \, q_{max} - \alpha p)$$

ou p est la valeur de la grandeur que le demandeur est prêt à accepter pour une unité de ressource supplémentaire au delà de q=s(p).

Selon une autre caractéristique, la fonction d'utilité est une fonction de la forme :

$$U(q) = \frac{\min(q, q_{max})^*(Ln(q_{max}) - Ln(\min(q, q_{max})) + 1)}{\alpha}$$

*Ln* est le logarithme népérien,
ce qui donne une fonction de demande S(p)

$$S(p) = q_{max}^* \exp(-\alpha^* p)$$

ou p est la valeur de la grandeur que le demandeur est prêt à accepter pour une unité de ressource supplémentaire au delà de q=s(p).

Selon une autre caractéristique, l'agent logique demandeur envoie sa requête en ne fournissant que deux paramètres (m=2) caractérisant sa fonction de demande, ces paramètres étant le coefficient $\alpha$ indiquant la valeur de la grandeur acceptable par le demandeur et $q_{max}$ la quantité maximum qu'il désire acquérir, cette requête peut être la même pour plusieurs participations successives.

Selon une autre caractéristique, le calcul de la valeur de la grandeur p caractérisant chaque agent logique à l'issue du traitement de toutes les demandes sur la durée prédéterminée comprend :

- un calcul de la valeur de la grandeur totale $C_i(s)$ de la quantité $a_i$ allouée à un agent logique demandeur i pour l'obtention de la quantité $a_i$ lorsque ce dernier a émis la fonction $s_i$, reposant sur le principe d'exclusion compensation, ce calcul se faisant à partir de la relation suivante :

$$C_i(s) = \sum_{j \neq i} \int_{a_j^s}^{a_j^0} s_j^{-1}(p) dp$$

dans laquelle, pour l'agent demandeur j, $a_j^s$ représente son allocation en présence de l'agent demandeur i et $a_j^0$ son allocation en son absence, les demandeurs participants autres j, se voyant dans ce cas allouer la quantité $a_j^0$ alors qu'ils n'ont que $a_j^s$ dans la situation actuelle du fait de la présence de i, $s_j^{-1}$ étant les inverses des fonctions de demande des agents demandeurs participants j.

Selon une autre caractéristique, le système de gestion est un système de gestion de ressources de télécommunication et en ce que la ressource est de la bande passante.

Un autre objet de la présente invention concerne un système de gestion d'une ressource comprenant des moyens d'allocation de ladite ressource entre n agents logiques demandeurs, à travers un réseau de télécommunication principalement caractérisé en ce que ces moyens comprennent :

- des moyens de réception d'une requête émise par chaque agent demandeur sous la forme d'une fonction de

demande de ressource $s_i(p)$, dans lesquelles p est une grandeur variable, ces fonctions de demande étant des fonctions prédéfinies positives décroissantes et continues,

- des moyens de traitement de toutes les requêtes reçues pendant une durée prédéterminée, pour déterminer la quantité de ressource à allouer à chaque agent demandeur, ces moyens de traitement comportant :

- des moyens de calcul d'une donnée correspondant à une valeur de la grandeur dite grandeur d'équilibre p* à partir de la somme S des n fonctions de demande $s_i(p)$,

au moyen de la relation : S(p*)=Q,

- dans laquelle Q est la donnée quantité disponible, et
- S(p) est la demande totale correspondant à la somme des demandes $s_i(p)$ de chaque agent demandeur pour chaque valeur prise par la grandeur p,

$$S(p)=s_1(p) +s_2(p) +...+s_i(p)+...+s_n(p),$$

- des moyens de calcul des données correspondant à la quantité $a_i$ à allouer pour cette valeur d'équilibre p* à chaque agent demandeur i à partir de sa fonction de demande $s_i$ telle que :
  - $a_i = s_i(p^*)$,
- des moyens d'allocation des quantités de ressources correspondantes et d'enregistrement de ces données pour les fournir à un système d'exploitation.

Selon une autre caractéristique, les moyens d'allocation de la ressource sont réalisés par un ordinateur de type serveur programmé à cet effet et, ledit serveur étant relié à l'équipement du réseau de télécommunication en charge des demandes de ressource que l'on cherche à partager entre les entités qui en font la demande.

Selon une autre caractéristique, les agents logiques demandeurs comportent des moyens pour enregistrer au moins une fonction de demande et des moyens pour envoyer des requêtes sous la forme de fonctions de demande.

Dans le cas où la fonction de demande se caractérise par uniquement deux paramètres, les agents demandeurs comportent des moyens pour choisir un couple de valeur des paramètres à chaque nouvelle demande et le fournir au serveur.

Selon une autre caractéristique, les agents logiques demandeurs sont réalisés par des automates programmés pour effectuer les requêtes et pour dialoguer avec le serveur.

Selon une autre caractéristique, les automates sont constitués par des agents logiciels mobiles pouvant être placés dans le serveur.

Dans un exemple préférentiel, la ressource est une ressource de télécommunication.

Dans ce cas, la ressource à allouer peut être de la bande passante ou les ports d'un équipement d'accès à un réseau.

BREVE DESCRIPTION DES DESSINS.

D'autres particularités et avantages de l'invention apparaîtront clairement à la lecture de la description qui est donnée ci-après à titre d'exemple non limitatif et en regard des dessins sur lesquels,

- les figures 1A et 1B, représentent une fonction d'utilité $U_i$ et sa dérivée $U'_i$ (utilité marginale),
- les figures 2A et 2B, représentent trois exemples de fonction d'utilité pour une même quantité maximale ($q_{max}$), et les utilités marginales correspondantes,
- la figure 2C représente les fonctions de demande correspondant aux fonctions d'utilité marginale de la figure 2B ;
- la figure 2D représente deux exemples particuliers de fonction d'utilité,
- la figure 2E représente les fonctions de demande correspondant aux fonctions d'utilité de la figure 2D ;
- la figure 3, représente un exemple de fonction de demandes $s_1$, $s_2$ de deux demandeurs,
- la figure 4, illustre schématiquement le calcul de la valeur de la grandeur p pour cet exemple simple avec deux demandeurs,
- la figure 5, illustre le schéma général d'un système de mise en oeuvre du procédé,
- la figure 6, illustre un schéma de réalisation d'agents logiques utilisateurs du système.

Le mécanisme de gestion de ressource proposé pour allouer une ressource multi-unitaire entre plusieurs utilisateurs repose sur le fait que chaque demandeur i utilisateur de la ressource, possède un intérêt pour recevoir une

part (quantité) $a_i$ de la ressource totale Q disponible à un instant donné. L'intérêt pour l'entité utilisatrice du système de gestion d'allocation est mesuré par une grandeur p variable dans le temps.

Ce mécanisme permet d'allouer les « bonnes » quantités $a_i$ de la ressource à chacun des utilisateurs pour une valeur $C_i$.

Dans le procédé proposé, chaque entité est conduite à fournir son évaluation réelle (ou encore son utilité) pour l'obtention de la quantité de ressource (cas du demandeur) ou de la valeur de la grandeur p auquel il est prêt à fournir la ressource (cas du fournisseur).

En fait l'agent fournisseur est considéré comme un agent demandeur de toute la quantité de ressource Q.

Ce dernier peut éviter la fourniture de la ressource en dessous d'une valeur minimum limite de la grandeur. Le risque de cette opération est qu'une certaine quantité de ressource ne soit pas distribuée (puisque conservée par lui-même).

Le mécanisme proposé s'adapte à des variations du nombre de demandeurs et à leur prédisposition à requérir la ressource. Il peut exister des périodes creuses avec peu de demandeurs et des périodes chargées avec beaucoup plus de demandeurs.

Le mécanisme proposé autorise alors la régulation de la demande en fonction de l'offre constante de ressource Q au travers d'une grandeur de mesure variable.

Pour obtenir une quantité de ressource significative pendant une période chargée, le demandeur doit accepter une valeur élevée de la grandeur de mesure. Par contre dans les périodes creuses, il peut obtenir une grande quantité de ressource pour une valeur plus modérée de cette grandeur.

Le mécanisme selon l'invention n'est pas itératif. Il aboutit à un équilibre de meilleure satisfaction des demandeurs à la réception d'une seule requête formulée par chaque demandeur qui participent à une demande d'allocation pendant une durée prédéterminée.

En outre, les données ainsi déterminées sont fournies à un système d'exploitation qui utilise le principe de Vickrey, au cas multi-unitaire, reposant sur l'exclusion-compensation pour calculer une donnée caractéristique pour chaque requête émises.

Le mécanisme de gestion proposé se déroule de la manière suivante :

- un fournisseur a une quantité quelconque Q d'une ressource ou bien divisible disponible.

Typiquement dans une application télécommunication ou réseau il peut s'agir de bande passante ou bien des portes logiques d'accès à un équipement.

- n entités sont demandeuses, ce qui signifie qu'elles sont en compétition pour le partage de cette ressource sur une durée prédéterminée. Chacun d'entre elles se positionne sur une fonction d'utilité $U_i$ de la quantité q qu'elle désire avoir. Il s'agit en fait de l'évaluation par le demandeur de son intérêt pour une certaine quantité de ressource.

Le choix d'une fonction d'utilité pourrait être laissé à l'entière liberté des agents demandeurs, mais pour des raisons de praticité de mise en oeuvre, on préfère proposer aux agents demandeurs de se positionner sur un choix de fonctions d'utilité prédéfinies dans l'automate programmé à cette fin pour la négociation. De façon pratique, l'automate programmé à cet effet choisit la fonction d'utilité qu'il va utiliser lors d'une demande.

La connaissance de la fonction d'utilité $U_i(q)$ d'un demandeur permet d'en déduire sa fonction de demande $s_i(p)$. Concrètement la fonction de demande d'un demandeur est l'inverse de la fonction d'utilité marginale $U'_i(q)$. On commet par conséquent un léger abus de langage car la fonction de demande ainsi construite donne la valeur de la demande q d'un participant demandeur en fonction d'une valeur déterminée de la grandeur p, dite valeur marginale, que le demandeur est prêt à accorder pour une quantité de ressource comprise entre q et q+$\delta q$, ou $\delta q$ est une petite quantité, alors que plus classiquement une fonction de demande donne la quantité q de ressource que le client est prêt à acquérir en fonction d'une valeur moyenne pour la grandeur p de la ressource.

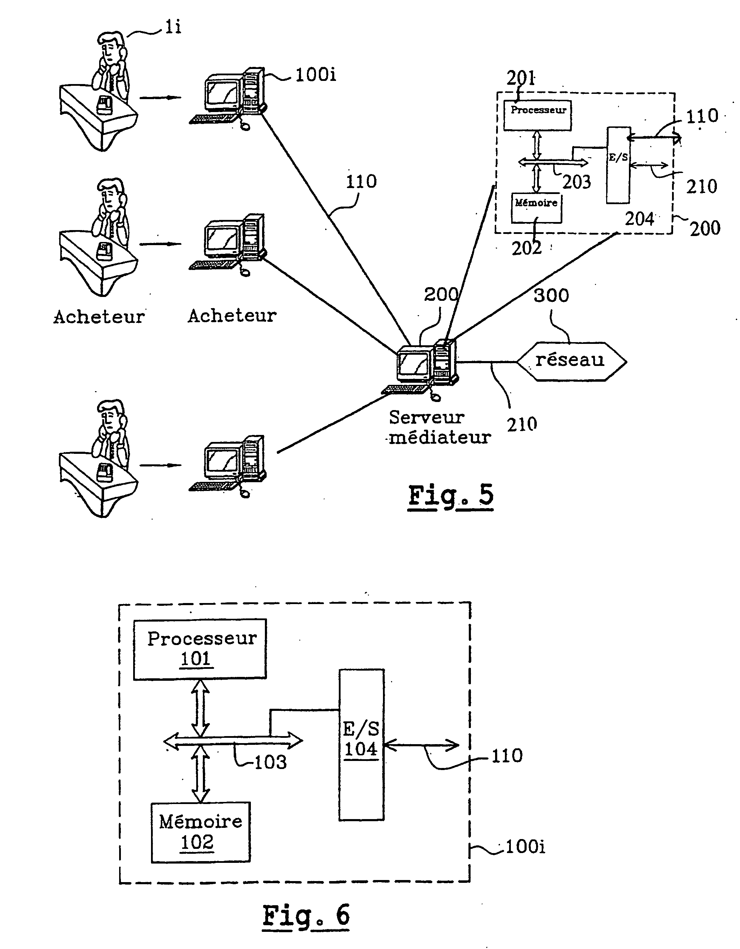

L'entité, à savoir le serveur 200 figure 5, gérant une demande (c'est-à-dire l'ensemble des requêtes émises par les demandeurs pendant une durée prédéterminée), collecte les fonctions de demande $s_i(p)$ des différents acheteurs et a connaissance de la quantité Q totale qui peut être allouée.

Pour participer à une demande, un utilisateur donne sa fonction de demande $s_i(p)$ qui peut être, en pratique, l'inverse de sa fonction d'utilité marginale pour la ressource.

Les demandeurs peuvent bien entendu annoncer une fonction de demande non sincère (ne disent pas la vérité i.e. ne traduisant pas leur véritable évaluation de la ressource). Cependant, le procédé selon la présente invention met en oeuvre un mécanisme de calcul d'allocation de ressource qui incite chaque demandeur à envoyer la demande appropriée car cela lui procure les meilleurs conditions d'allocation.

Les meilleures conditions sont mesurées par la différence entre l'utilité que lui procure l'acquisition d'une quantité de ressource et la valeur de la grandeur qu'il doit accepter pour cette quantité. Le déposant a démontré qu'annoncer sa véritable fonction de demande est pour chaque demandeur une stratégie dominante.

Selon l'invention, chaque demandeur i possède par conséquent une évaluation pour l'acquisition d'une quantité $q_i$ de ressource qui se traduit par une fonction d'utilité $U_i(q) \geq 0$, cette évaluation est en fait une donnée privée. Le calcul de la dérivée de cette fonction, $U'_i(q)$ donne la fonction d'utilité marginale accordée par l'utilisateur i à l'acquisition d'une unité de ressource supplémentaire.

En terme mathématique la fonction $U_i(q)$ se caractérise en répondant aux conditions suivantes :

- $U_i(0) = 0$,
- $U_i$ est dérivable et concave,
- $U'_i \geq 0$ est décroissante et continue. C'est la fonction dérivée de la fonction $U(i)$. Elle caractérise l'utilité marginale du demandeur i pour la ressource c'est-à-dire la valeur de la grandeur qu'il est prêt à accepter pour obtenir une unité de ressource au-delà de celle qu'il a déjà obtenue.

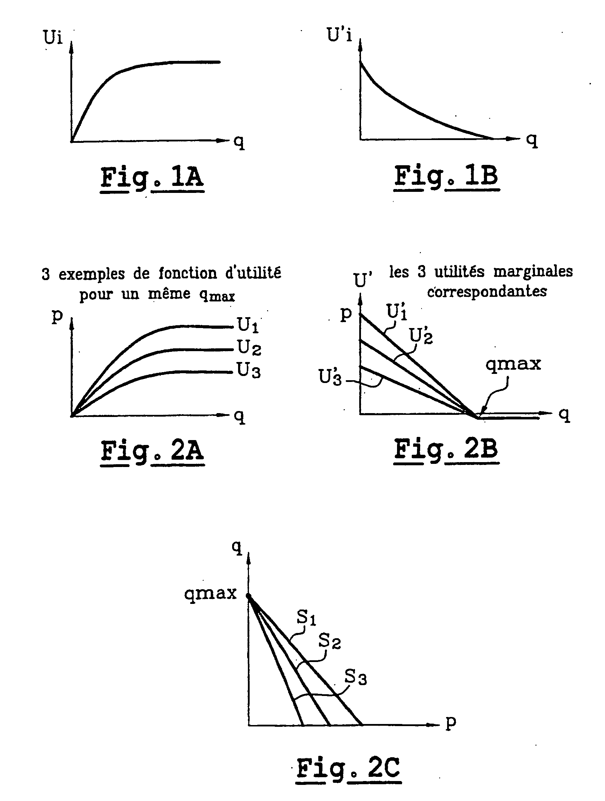

Les figures 1A et 1B illustrent une forme générale des fonctions $U_i(q)$ et $U'_i(q)$.

Comme on peut le voir, la fonction d'utilité d'un demandeur 100i (figure 5) croit continûment avec la quantité qu'il peut obtenir mais cette croissance est sous linéaire (concave). C'est à dire qu'au fur et à mesure que la quantité obtenue grandit, l'intérêt pour une unité supplémentaire diminue. A l'extrême, il existe pour chaque utilisateur une quantité de ressource limite (seuil) au-delà de laquelle cet utilisateur n'accorde plus aucun intérêt pour obtenir une unité supplémentaire (i.e. la valeur de la grandeur est nulle).

A chaque nouvelle demande (étape de gestion d'une nouvelle demande), le serveur 200 reçoit toutes les requêtes sous la forme de fonctions de demande $s_i$ (une fonction par demandeur i).

A partir de ces informations, le serveur 200 détermine pour chaque valeur de la grandeur p, la demande totale S qui est la somme des demandes individuelles. Le serveur 200 calcule la valeur d'équilibre p* qui égalise l'offre et la demande tel que :

S(p*)=Q, Q représente toute la quantité à allouer c'est donc l'offre totale.

Ayant ainsi défini la valeur d'équilibre p*, le serveur 200 peut alors calculer les allocations de ressource $a_1$, $a_2$,..., $a_i$, ...,$a_n$ pour chaque demandeur en procédant au calcul suivant :

$a_i=s_i(p^*)$ pour chaque demandeur(i=1 à n).

Par ce calcul, le serveur détermine comme allocation à chaque demandeur, la valeur de sa fonction de demande pour la valeur p*.

Le serveur 200 attribue à chaque demandeur une quantité allouée $a_i$ ainsi calculée et les informe également de la valeur d'équilibre de la grandeur p, valeur qui sert de base au mécanisme.

Certains demandeurs pourront ne pas être servis (en effet pour la valeur p* des utilisateurs j peuvent avoir une demande nulle i.e. $s_j(p^*)=0$.

Cette étape de gestion d'allocation est répétée à intervalle régulier prédéfinis lors de la mise en exploitation du système d'allocation de ressource.

La fréquence de renouvellement des demandes (émission de nouvelles requêtes par les demandeurs) sera choisie de manière à ne pas être trop importante afin de ne pas utiliser trop de ressources de calcul et/ou encombrer le réseau par des messages de signalisation entre les logiciels demandeurs 100i des utilisateurs et le serveur 200.

Cette fréquence doit cependant être suffisante pour prendre en compte les évolutions : arrivées ou départs de demandeurs, changement des fonctions de demande des demandeurs participants et le cas échéant variation de la quantité de ressource disponible.

Une deuxième étape du procédé consiste ensuite à calculer la valeur de la grandeur correspondante c'est-à-dire la détermination de la valeur pour chaque demandeur i. Cette valeur est obtenue par le résultat du calcul d'intégrale suivant :

$$C_i(s) = \sum_{j \neq i} \int_{a_j^s}^{a_j^0} s_j^{-1}(p)\,dp$$

Cette relation donne la valeur totale $C_i(s)$ que devra accepter le demandeur i pour l'obtention de la quantité $a_i(s)$ déterminé à l'étape précédente, quand la demande est s. Pour demandeur j, $a_j^s$ représente son allocation en cas de présence du demandeur i et $a_j^0$ son allocation dans le cas où il serait absent (Si le demandeur i n'était pas présent alors les autres participants j se verrait allouer la quantité $a_j^0$ alors qu'ils n'ont que $a_j^s$ dans la situation actuelle du fait de la présence de i).

Le calcul de la valeur de la grandeur p fait intervenir la fonction inverse $s_j^{-1}$ de la fonction de demande $s_j$, des autres participants j, car on cherche une valeur en fonction d'une quantité déjà définie et non une quantité en fonction d'une valeur donnée.

On va dans ce qui suit donner deux exemples de fonction d'utilité et les fonctions de demande correspondantes.

Il est bien entendu que toute fonction d'utilité (et de demande) pourra être choisie dès lors qu'elle remplit les conditions énoncées précédemment. Ces fonctions peuvent être caractérisées par m paramètres correspondant par exemple au choix d'un certains nombres de points caractéristiques suite à une discrétisation (numérisation) de la fonction.

Selon un premier exemple la fonction d'utilité peut être la fonction polynomiale suivante :

$$U(q)=\frac{\min(q,q_{\max})^*(q_{\max}-0{,}5^*\min(q,q_{\max}))}{\alpha}$$

ce qui donne une fonction de demande S(p)

$$S(p)= \max(0 \; ; \; q_{\max}- \alpha^*p)$$

ou p est la valeur dite valeur marginale que le demandeur est prêt à accepter pour une unité de ressource supplémentaire au delà de q=s(p).

Dans ce premier exemple, chaque demandeur i a une fonction d'évaluation $U_i$ polynomiale (de degré 2) jusqu'au point correspondant à la quantité maximale $q_{max}$ du demandeur i, puis cette fonction est constante au-delà.

Selon un autre exemple la fonction d'utilité peut être la fonction exponentielle suivante :

$$U(q)=\frac{\min(q,q_{\max})^*(Ln(q_{\max})-Ln(\min(q,q_{\max}))+1)}{\alpha}$$

dans laquelle $Ln$ est le logarithme népérien, ce qui donne une fonction de demande S(p)

$$S(p)=q_{\max}^*\exp(-\alpha^*p)$$

ou p est la valeur dite valeur marginale que le demandeur est prêt à accepter pour une unité de ressource supplémentaire au delà de q= s(p).

Dans ces deux cas, les fonctions d'utilité et d'utilité marginale $U'_i$ (fonction dérivée de $U_i$) et par voie de conséquence les fonctions de demande (fonction inverse de l'utilité marginale) peuvent être caractérisées par seulement deux paramètres $q_{max}$ et $\alpha$ dans lesquelles :

- $q_{max}$ est la quantité maximale de ressource au-delà de laquelle l'agent demandeur n'ira pas pour obtenir de la ressource supplémentaire (utilité marginale nulle) et
- $\alpha$ caractérise le niveau d'intérêt de l'utilisateur pour la ressource. Plus $\alpha$ est grand et plus cet intérêt diminue rapidement avec l'augmentation de la valeur de la grandeur p de la ressource. Il s'agit d'un coefficient indiquant la prédisposition acceptée par le demandeur.

Si on prévoit d'utiliser plusieurs types de fonctions prédéfinies (fonction 1, 2, 3,... etc), il faudra en fait fournir 3 paramètres, les paramètres tels que définis précédemment et un troisième paramètre désignant le type de fonction choisie (fonction 1 ou 2 ou 3 de la liste des fonctions prédéfinies).

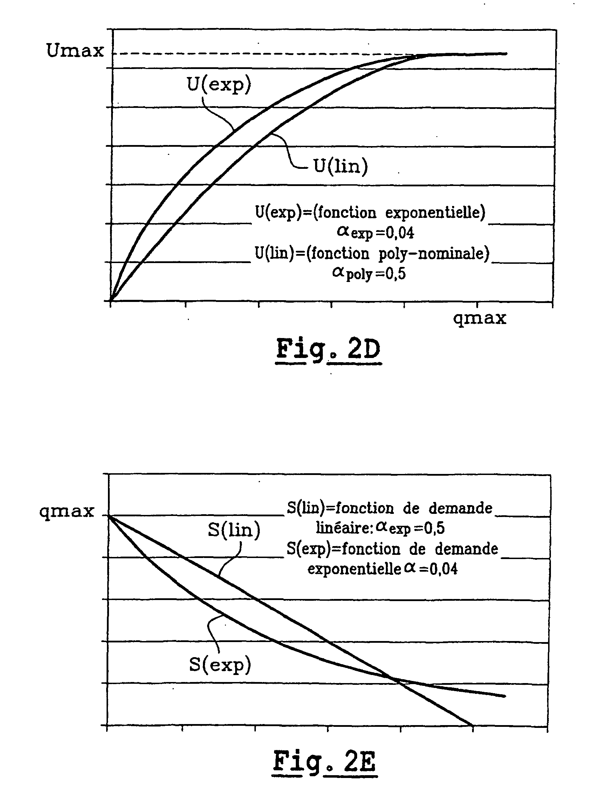

La figure 2D illustre les fonctions d'utilité correspondant aux deux exemples précédents. La figure 2E illustre les fonctions de demande correspondant aux deux fonctions d'utilité de la figure 2D.

Dans ces exemples les acheteurs n'ont plus besoin d'annoncer au serveur 200 des fonctions de demande entièrement définies pour toutes les quantités possibles mais seulement les deux paramètres : $q_{max}$ et $\alpha$ (chaque demandeur envoie sa fonction de demande).

L'émission de la requête consiste alors à donner deux paramètres à savoir dans ce cas, le couple ($q_{max}$, $\alpha$).

Dans le cas d'une application de l'invention à l'allocation d'une ressource de télécommunication telle que la bande passante :

- la valeur de $q_{max}$ correspond au débit maximum requis par l'utilisateur;
- le coefficient $\alpha$ quant à lui est choisi parmi un ensemble de valeurs préenregistrées et qui correspondent à l'aspiration de l'utilisateur pour obtenir ce débit maximal (différentes valeurs de p permettant d'obtenir plus).

Les figures 2A et 2B montrent l'allure prise par la fonction d'utilité et sa dérivée pour trois demandeurs ayant la même valeur de quantité maximale.

Le coefficient $\alpha$ correspond à la pente des droites (fonction de demande) de la figure 2C.

Cependant, comme précédemment, plutôt que de laisser l'utilisateur choisir une fonction d'utilité quelconque, qui possède les propriétés de croissance et continuité énoncées précédemment, il est prévu avantageusement de proposer au demandeur de se positionner sur un choix limité de possibilité.

Ce choix comporte, selon ces deux paramètres : le débit maximal requis par le demandeur et le niveau de prédisposition, c'est-à-dire une valeur seuil de la grandeur pour obtenir au mieux ce débit maximal.

Il peut également être prévu qu'un choix de plusieurs paramètres de prédisposition soit proposé.

On peut par exemple programmer la définition de plusieurs classes de service : « or » pour une valeur de $\alpha$ prédéterminée, « argent » pour une autre valeur ou « bronze » pour encore une autre valeur.

La classe « or » correspond à une plus forte prédisposition que la classe « argent » qui correspond elle-même à une plus forte prédisposition que la classe « bronze »

On va maintenant détailler ces mécanismes pour mieux comprendre au moyen d'un exemple simple dans lequel il n'y a que deux demandeurs.

Dans l'exemple qui est donné, le demandeur 1 a une quantité maximale $q_{max}$ plus élevée que celle du demandeur 2 mais sa prédisposition à accepter la valeur de la grandeur p est plus faible (il s'agit des valeurs que s'est fixé le demandeur au moment de la demande). A partir de ces informations collectées, le serveur 200 calcule (pour chaque valeur p) la somme S de ces deux fonctions de demande.

Le serveur 200 peut alors déterminer la valeur d'équilibre de marché qui égalise l'offre et la demande. Cette valeur correspond à la valeur de p* tel que S(p*) = Q. En effet S(p*) correspond bien à la demande totale pour la valeur p* et Q est par définition la quantité de ressource offerte.

Connaissant p*, on détermine les allocations $a_1$ et $a_2$ pour chacun des demandeurs. Chaque demandeur obtient la quantité correspondante à sa fonction de demande pour la valeur p* à savoir : $a_1(s) = s_1(p^*)$ et $a_2(s) = s_2(p^*)$.

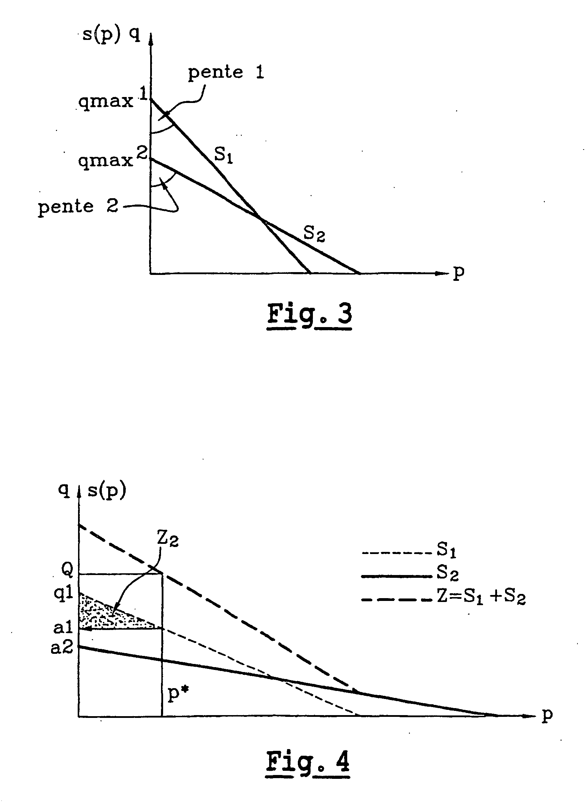

La figure 3 illustre l'étape d'allocation que l'on vient de décrire dans le cas de deux demandeurs dont les fonctions de demande sont affines (fonction d'utilité polynomiale d'ordre 2).

Dans une autre étape du procédé, les données ainsi déterminées sont fournies à un système d'exploitation qui peut être intégré dans le système de gestion lui-même. Cette exploitation des données consiste à calculer la valeur de la grandeur pour chacun des demandeurs. Cette étape met en oeuvre le principe d'exclusion-compensation cité précédemment. Dans cet exemple simple, le demandeur 1 annonce être prêt à accepter l'inverse de $s_1$.

En effet $s_1(p)$ représente la quantité demandée par le demandeur 1 si la valeur de la grandeur est de p. Si le demandeur 2 était absent de la demande, le demandeur 1 aurait reçu sa quantité maximale demandée que l'on va désigner par $q_1$. Pour passer de son allocation $a_1$ à sa quantité maximale $q_1$ le demandeur 1 accepte une valeur correspondant à l'intégrale de l'inverse de $s_1$. (On effectue un calcul d'intégrale car on passe d'une valeur marginale à une valeur totale).

La figure 4 illustre ces opérations, la surface de la zone hachurée référencée $Z_2$ correspond au résultat.

La figure 5 schématise le système de mise en oeuvre du procédé, il peut s'agir par exemple d'un système de gestion de ressources de télécommunications.

Une réalisation pratique de mise en oeuvre opérationnelle du mécanisme d'allocation qui vient d'être décrit s'effectue au travers d'un ensemble d'automates ou d'agent logiciels demandeurs 100i. Chaque demandeur i (mais aussi le fournisseur) programme sa fonction d'utilité et par conséquent sa fonction de demande (définie par seulement deux paramètres dans les exemples signalés) dans son automate ou agent logiciel 100i.

En fait ces fonctions peuvent être prédéfinies et l'agent logique demandeur n'a plus alors qu'a choisir l'une d'entre elle. Ces agents logiques dialoguent avec le serveur 200 pour effectuer leur requête d'allocation de ressource.

Le serveur 200 ou système de gestion de la ressource est relié à un réseau de télécommunication 300 et aux agents logiques acheteurs 100i par des moyens de liaison 210 et 110. Ce serveur 200 comprend un automate programmé pour la réalisation des calculs précités mettant en oeuvre le mécanisme décrit. Cet automate comporte une unité de traitement de type processeur 201, des moyens de mémorisation 202, une interface d'entrée-sortie 204. L'automate comprend des liaisons avec l'extérieure 210 vers le réseau 300 et 110 vers les agents logiques demandeurs 100i.

La figure 6 illustre un exemple de réalisation d'un automate implanté dans l'agent acheteur 100i. Cet automate comporte un processeur 101 relié à des moyens de mémorisation symbolisés par le bloc 102. Ces moyens de mémorisation regroupent au moins une mémoire vive de travail, une mémoire de programme de type ROM ou EEPROM contenant le programme de fourniture des fonctions d'utilité et de demande du demandeur et de dialogue avec le serveur. Le processeur 101 et les mémoires 102 sont reliés par un bus 103 lui-même relié à un port d'entrée-sortie vers un lien de communication 110 avec le serveur 200.

Lorsque la mise en oeuvre est réalisée par des agents logiciels, ceux-ci peuvent être mobiles.

Ces agents logiciels 100i peuvent être localisés proches du demandeur i c'est-à-dire dans le terminal de commande de l'utilisateur, lorsque ce dernier veut avoir une interaction permanente sur sa fonction de demande.

Dans le cas où la fonction de demande d'un demandeur reste stable, l'agent logiciel de gestion des requêtes du demandeur peut alors se localiser proche du serveur de gestion d'allocation 200 c'est-à-dire dans le serveur de gestion.

Sur le schéma de la figure 5, la ressource Q partagée correspond à la bande passant de la liaison matérialisée entre le serveur de gestion et le « réseau ».

L'avantage d'une « délocalisation » de l'agent de gestion des requêtes du demandeur réside dans la diminution du flux d'information de commande circulant entre le serveur et les agents demandeurs ainsi que d'accélérer le dialogue entre l'automate de gestion du demandeur et le serveur de gestion d'allocation. Quand un agent demandeur est localisé proche du serveur il ne génère aucun message de demande sur le réseau.

Le serveur de gestion d'allocation, prend en compte toutes les requêtes des utilisateurs et procède au calcul du résultat de la demande suivant le mécanisme décrit.

Dans le cas du partage de bande passante d'un lien, le serveur 200 peut être un serveur logiciel localisé dans le routeur de concentration ou de tout autre équipement de concentration.

A l'issue de sa prise de décision, le serveur commande alors l'équipement (dans l'exemple précité, le routeur de concentration) pour que celui-ci alloue la quantité décidée à chacun des demandeurs.

Pour d'autres ressources cela peut être un serveur dédié. Il est à noter que le serveur et les automates sont connectés par des liens du réseau et donc utilisent de la ressource réseau (bande passante).

Le procédé de l'invention est tout à fait adapté à un fonctionnement dynamique. Des demandeurs peuvent se connecter pour participer à la demande à tout moment. Le mécanisme permet alors de recalculer l'allocation et la valeur de la grandeur p pour chacun.

A la différence des enchères PSP, l'équilibre est automatiquement atteint car les automates demandeurs n'émettent pas de requête au coup par coup mais une seule contenant la fonction de demande qui correspond à leur évaluation de la ressource.

A titre d'exemple la grandeur variable dans le temps permettant de caractériser une ressource peut être le prix. Il ne s'agira pas d'une somme d'argent dans « l'absolu » mais d'un prix par unité de temps d'utilisation.

Les demandeurs sont des acheteurs clients du fournisseur de la ressource.

Lorsqu'il s'agit d'une ressource de réseau de télécommunication, la somme que devra payer le client du réseau sera donc le produit entre ce prix unitaire et la durée pendant laquelle il sera resté connecté au réseau.

Les calculs du prix à payer c'est-à-dire de la charge, sont également enregistrés pour être fournis à un serveur chargé de la facturation.

Cela peut se traduire par une incrémentation du compte client de la somme à payer ou par une décrémentation du nombre de « jetons » crédités au compte du client. Pour cela le serveur de gestion d'allocation communique les informations nécessaires au serveur chargé de la facturation.

Par exemple les acheteurs payent x euros par Mégabits par seconde obtenus. S'il n'en est pas ainsi, un acheteur qui ne conserve une quantité de ressource que pour quelques secondes (i.e. d'autres utilisateurs sont arrivés et lui ont « confisqué » sa ressource pour partie ou complètement par requête plus favorable) payerait le même prix que s'il avait conservé cette même quantité pendant plusieurs jours.

L'unité de tarification temporelle minimale peut être l'incrément de temps entre deux renégociations de l'enchère : temps minimal de détention de la ressource. Le mécanisme peut être prévu pour qu'il ne soit pas forcément nécessaire d'obliger les acheteurs « satisfaits » à modifier leur requête à chaque renégociation, le serveur de gestion d'allocation peut en effet par défaut supposer inchangée leur fonction de demande.

Pour détecter le départ d'un client, on peut par exemple à cette fin, prévoir le renvoi de toutes les fonctions de demande par les automates de négociation des acheteurs à chaque étape. Ce moyen simple permet en effet de détecter un départ.

Comme on a pu le voir, en n'émettant qu'une demande lors d'une négociation, on atteint un équilibre où les acheteurs misent leur véritable fonction de demande et donc leur véritable fonction d'évaluation. Le fait que l'équilibre recherché soit atteint en une seule demande (sans processus d'itération) présente un avantage considérable par rapport à l'existant.

A cet avantage se rajoute l'avantage par rapport aux mécanismes proposés, que le mécanisme impose moins d'hypothèses techniques sur les caractéristiques des acheteurs. La seule hypothèse faite est que les fonctions de demandes doivent être décroissantes, ce qui est complètement naturel : On n'imagine pas en effet qu'un client soit prêt à payer plus chère la ressource (au sens du prix unitaire) lorsque la quantité qu'il demande augmente. Cela irait à l'opposé des effets « discount » que l'on rencontre habituellement.

Enfin contrairement au procédé itératif des enchères PSP, les utilisateurs ne sont pas informés à chaque itération des requêtes effectuées par les autres participants. Il a été démontré en effet que cette information permettait des collusions de clients pour par exemple payer moins.

**Revendications**

1.  Procédé d'allocation d'une ressource entre n entités ou agents logiques demandeurs de la ressource, au moyen d'un système de gestion (200) de la dite ressource, comprenant, sur une durée prédéterminée :

    -   la réception d'une requête émise par chaque agent demandeur (100i) sous la forme d'une fonction de demande de ressource $s_i(p)$, dans lesquelles p est une grandeur variable, ces fonctions de demande étant des fonctions prédéfinies positives décroissantes et continues,
    -   le traitement de toutes les requêtes reçues pendant la durée prédéterminée, pour déterminer la quantité de ressource à allouer à chaque agent demandeur, ce traitement comportant les étapes suivantes :
    -   le calcul d'une donnée correspondant à une grandeur dite grandeur d'équilibre p* à partir de la somme S des n fonctions de demande $s_i(p)$,

        au moyen de la relation : $S(p^*) = Q$,

    -   dans laquelle Q est la donnée quantité disponible, et
    -   S(p) est la demande totale correspondant à la somme des demandes $s_i(p)$ de chaque agent pour chaque valeur que peut prendre la grandeur p,

        $$S(p) = s_1(p) + s_2(p) + \ldots + s_i(p) + \ldots + s_n(p),$$

    -   le calcul des données correspondant à la quantité $a_i$ à allouer pour cette grandeur d'équilibre p* à chaque agent i à partir de sa fonction de demande $s_i$ telle que :

        $$- a_i = s_i(p^*),$$

    -   l'utilisation par le système de gestion, des données obtenues par le calcul pour allouer les quantités de ressources correspondantes et l'enregistrement de ces données pour les fournir à un système d'exploitation;

    -   **caractérisé en ce qu'il consiste :**

        -   à programmer une fonction $U'_i(q)$ dans l'agent logique demandeur i,
        -   chaque agent demandeur i participant pendant la durée prédéterminée, étant ainsi **caractérisé par** son intérêt pour l'obtention d'une quantité q de la ressource globale Q, par y une fonction d'utilité $U_i(q)$ où par une fonction d'utilité marginale $U'_i(q)$ accordée pour l'acquisition d'une unité supplémentaire, $U'_i(q)$ étant la dérivée de $U_i(q)$,

        et à chaque nouvelle participation :

        -   à déterminer la fonction de demande $s_i(p)$ en calculant la fonction inverse de la fonction $U'_i(q)$, l'agent logique demandeur émettant sa requête en envoyant cette fonction;

    -   **et en ce que :**

        la fonction d'utilité est une fonction polynomiale de la forme :

$$U(q) = \frac{\min(q, q_{max})^*(q_{max} - 0.5^*\min(q, q_{max}))}{\alpha}$$

ce qui donne une fonction de demande S(p)

$$S(p) = \max(0 \; ; \; q_{max} - \alpha p)$$

ou p est la valeur de la grandeur que le demandeur est prêt à accepter pour une unité de ressource supplémentaire au delà de q=s(p),

$q_{max}$ la quantité maximum qu'il désire acquérir,

$\alpha$ indiquant la valeur de la grandeur acceptable par le demandeur;

Ou une fonction de la forme :

$$U(q) = \frac{\min(q, q_{max})^*(Ln(q_{max}) - Ln(\min(q, q_{max})) + 1}{\alpha}$$

$Ln$ est le logarithme népérien,

ce qui donne une fonction de demande S(p)

$S(p) = q_{max}^* \exp(-\alpha^* p)$

ou p est la valeur de la grandeur que l'acheteur est prêt à accepter pour une unité de ressource supplémentaire au delà de q=s(p),

$q_{max}$ la quantité maximum qu'il désire acquérir,

$\alpha$ indiquant la valeur de la grandeur acceptable par le demandeur.

**2.** Procédé d'allocation d'une ressource selon la revendication 1, **caractérisé en ce que** la fourniture de la fonction de demande consiste à fournir au système de gestion, des données correspondant à m paramètres caractérisant cette fonction de demande, m étant supérieur ou égal à 2.

**3.** Procédé d'allocation d'une ressource selon la revendication 1 ou 2, **caractérisé en ce que** l'agent logique demandeur (100i) envoie sa requête en ne fournissant que deux paramètres (m=2) caractérisant sa fonction de demande, ces paramètres étant le coefficient $\alpha$ indiquant la valeur de la grandeur acceptable par le demandeur et $q_{max}$ la quantité maximum qu'il désire acquérir, cette requête peut être la même pour plusieurs participations successives.

**4.** Procédé d'allocation d'une ressource selon la revendication 1 ou 2 ou 3, **caractérisé en ce que** le calcul la valeur de la grandeur p caractérisant chaque agent logique à l'issue du traitement de toutes les demandes sur la durée prédéterminée comprend :

- un calcul de la valeur de la grandeur totale $C_i(s)$ de la quantité $a_i$ allouée à un agent logique demandeur i pour l'obtention de la quantité $a_i(s)$ lorsque ce dernier a émis la fonction $s_i$, reposant sur le principe d'exclusion compensation, ce calcul se faisant à partir de la relation suivante :

$$C_i(s) = \sum_{j \neq i} \int_{a_j^s}^{a_j^0} s_j^{-1}(p) dp$$

dans laquelle, pour l'agent demandeur j, $a_j^s$ représente son allocation en présence de l'agent demandeur i et $a_j^0$ son allocation en son absence, les demandeurs participants autres j, se voyant dans ce cas allouer la quantité $a_j^0$ alors qu'ils n'ont que $a_j^s$ dans la situation actuelle du fait de la présence de i, $s_j^{-1}$ étant les inverses des fonctions de demande des agents demandeurs participants j.

**5.** Procédé d'allocation d'une ressource selon l'une quelconque des revendications précédentes, **caractérisé en ce**

**que** le système de gestion (200) est un système de gestion de ressources de télécommunication et **en ce que** la ressource est de la bande passante.

6. Système de gestion d'une ressource comprenant des moyens d'allocation de ladite ressource entre n agents logiques demandeurs (100i), à travers un réseau de télécommunication (300), ces moyens comprenant :

- des moyens de réception d'une requête émise par chaque agent demandeur sous la forme d'une fonction de demande de ressource $s_i(p)$, dans lesquelles p est une grandeur variable, ces fonctions de demande étant des fonctions prédéfinies positives décroissantes et continues,
- des moyens de traitement (201, 202) de toutes les requêtes reçues pendant une durée prédéterminée, pour déterminer la quantité de ressource à allouer à chaque agent demandeur, ces moyens de traitement comportant :

    - des moyens de calcul (201) d'une donnée correspondant à une valeur de la grandeur dite grandeur d'équilibre $p^*$ à partir de la somme S des n fonctions de demande $s_i(p)$,

    au moyen de la relation : $S(p^*)=Q$,
- dans laquelle Q est la donnée quantité disponible, et
- S(p) est la demande totale correspondant à la somme des demandes $s_i(p)$ de chaque agent demandeur pour chaque valeur prise par la grandeur p,
    $$S(p)= s_1(p) + s_2(p) +...+s_i(p)+...+s_n(p),$$

    - des moyens de calcul des données correspondant à la quantité $a_i$ à allouer pour cette valeur d'équilibre $p^*$ à chaque agent demandeur i à partir de sa fonction de demande $s_i$ telle que :

- $a_i = s_i (p^*)$,
- des moyens d'allocation (201) des quantités de ressources correspondantes et d'enregistrement de ces données pour les fournir à un système d'exploitation;

    **caractérisé en ce que**:

- chaque agent demandeur i comporte des moyens d'enregistrement d'une fonction $U'_i(q)$; chaque agent demandeur i participant pendant la durée prédéterminée, étant ainsi **caractérisé par** son intérêt pour l'obtention d'une quantité q de la ressource globale Q, par sa fonction d'utilité $U_i(q)$ ou par une fonction d'utilité marginale $U'_i(q)$ accordée pour l'acquisition d'une unité supplémentaire, $U'_i(q)$ étant la dérivée de $U_i(q)$,

    et des moyens pour déterminer à chaque nouvelle participation la fonction de demande $s_i (p)$ en calculant la fonction inverse de la fonction $U'_i(q)$, l'agent logique demandeur émettant sa requête en envoyant cette fonction;

- la fonction d'utilité étant une fonction polynomiale de la forme :

$$U(q)=\frac{\min(q,q_{max})^*(q_{max}-0{,}5^*\min(q,q_{max}))}{\alpha}$$

ce qui donne une fonction de demande S(p)

$$S (p) = \max (0 ; q_{max}- \alpha p)$$

où p est la valeur de la grandeur que le demandeur est prêt à accepter pour une unité de ressource supplémentaire au delà de q=s(p),

$q_{max}$ la quantité maximum qu'il désire acquérir,

$\alpha$ indiquant la valeur de la grandeur acceptable par le demandeur;

**Ou une fonction de la forme :**

$$U(q) = \frac{\min(q, q_{max}) * (Ln(q_{max}) - Ln(\min(q, q_{max})) + 1}{\alpha}$$

*Ln* est le logarithme népérien,
ce qui donne une fonction de demande S(p)

$$S(p) = q_{max} * \exp(-\alpha * p)$$

ou p est la valeur de la grandeur que l'acheteur est prêt à accepter pour une unité de ressource supplémentaire au delà de q=s(p),
$q_{max}$ la quantité maximum qu'il désire acquérir,
$\alpha$ indiquant la valeur de la grandeur acceptable par le demandeur.

7. Système de gestion d'une ressource selon la revendication 6, **caractérisé en ce que** les moyens d'allocation de la ressource sont réalisés par un ordinateur de type serveur (200) programmé à cet effet et, ledit serveur étant relié à l'équipement du réseau de télécommunication en charge des demandes de ressource que l'on cherche à partager entre les entités qui en font la demande.

8. Système de gestion d'une ressource selon la revendication 6, **caractérisé en ce que**, la fonction de demande **se caractérisant par** uniquement deux paramètres, les agents demandeurs comportent des moyens (101) pour choisir un couple de valeur des paramètres à chaque nouvelle demande et le fournir au serveur.

9. Système de gestion d'une ressource selon la revendication 6 et 7, **caractérisé en ce que** les agents logiques demandeurs (100i) sont réalisés par des automates programmés pour effectuer les requêtes et pour dialoguer avec le serveur.

10. Système de gestion d'une ressource selon la revendication 6, **caractérisé en ce que** les automates (100i) sont constitués par des agents logiciels mobiles pouvant être placés dans le serveur.

11. Système de gestion d'une ressource selon la revendication 6, **caractérisé en ce que** la ressource est une ressource de télécommunication.

**Patentansprüche**

1. Verfahren zum Zuweisen eines Betriebsmittels an n logische Entitäten oder Agenten, die das Betriebsmittel anfordern, mittels eines Management-Systems (200) für das Betriebsmittel, wobei das Verfahren während einer vorgegebenen Zeitdauer umfasst:

   - Empfangen einer von jedem anfordernden Agenten (100i) ausgegebenen Anforderung in Form einer Betriebsmittelanforderungsfunktion $s_i(p)$, worin p eine variable Größe ist, wobei diese Anforderungsfunktionen im Voraus definierte, abnehmende und stetige positive Funktionen sind,
   - Verarbeiten aller empfangenen Anforderungen während der vorgegebenen Zeitdauer, um die Betriebsmittelmenge zu bestimmen, die jedem anfordernden Agenten zuzuweisen ist, wobei diese Verarbeitung die folgenden Schritte umfasst:

     - Berechnen einer Dateneinheit, die einer Größe, die Gleichgewichtsgröße p* genannt wird, entspricht, anhand der Summe S aus n Anforderungsfunktionen $s_i(p)$
        mittels der Beziehung: S(p*) = Q,

       - worin Q die Dateneinheit bezüglich der verfügbaren Menge ist und
       - S(p) die Gesamtanforderung ist, die der Summe der Anforderungen $s_i(p)$ jedes Agenten für jeden Wert, den die Größe p annehmen kann, entspricht,

$$S(p) = s_1(p) + s_2(p) + ... + s_i(p) + ... + s_n(p),$$

- Berechnen der Dateneinheiten, die der Menge $a_i$ entsprechen, die für diese Gleichgewichtsgröße p* jedem Agenten i zuzuweisen ist, anhand ihrer Anforderungsfunktion $s_i$, derart, dass:

  - $a_i = s_i(p^*)$,

- Verwenden der Daten, die durch die Berechnung erhalten werden, durch das Management-System, um die entsprechenden Betriebsmittelmengen zuzuweisen, und Aufzeichnen dieser Daten, um sie an ein Betriebssystem zu liefern,

**dadurch gekennzeichnet, dass** es darin besteht:

- eine Funktion $U'_i(q)$ in dem anfordernden logischen Agenten i zu programmieren,
- wobei jeder anfordernde Agent i, der während der vorgegebenen Zeitdauer teilnimmt, somit durch sein Interesse daran **gekennzeichnet** ist, eine Menge q der globalen Betriebsmittel Q zu erhalten, und zwar durch eine Nutzenfunktion $U_i(q)$ oder durch eine Grenznutzenfunktion $U'_i(q)$, die an die Erfassung einer zusätzlichen Einheit $U'_i(q)$, die die Ableitung von $U_i(q)$ ist, angepasst ist,

  und bei jeder erneuten Teilnahme:

- die Anforderungsfunktion $s_i(p)$ zu bestimmen, indem die inverse Funktion der Funktion $U'_i(q)$ berechnet wird, wobei der anfordernde logische Agent seine Anforderung ausgibt, indem er diese Funktion schickt;
- **und dass:**
- die Nutzenfunktion eine Polynomfunktion der folgenden Form ist:

$$U(q)=\frac{\min(q,q_{max})^*(q_{max}-0{,}5^*\min(q,q_{max}))}{\alpha}$$

was eine Anforderungsfunktion S(p) ergibt:
$$S(p) = \max(0; q_{max} - \alpha p)$$
wobei p der Wert der Größe ist, die der Anforderer für eine zusätzliche Betriebsmitteleinheit jenseits von q = s(p) zu akzeptieren bereit ist,
$q_{max}$ die maximale Menge ist, die er erhalten möchte,
$\alpha$ den Wert der von dem Anforderer annehmbaren Größe angibt;

- oder eine Funktion der folgenden Form ist:

$$U(q)=\frac{\min(q,q_{max})^*(Ln(q_{max})-Ln(\min(q,q_{max}))+1}{\alpha}$$

  wobei Ln der natürliche Logarithmus ist,
was die folgende Anforderungsfunktion S(p) ergibt:

$$S(p) = q_{max}^*\exp(-\alpha^*p)$$

wobei p der Wert der Größe ist, die der Abnehmer für eine zusätzliche Betriebsmitteleinheit jenseits von q = s(p) zu akzeptieren bereit ist,
$q_{max}$ die maximale Menge ist, die er erhalten möchte,
$\alpha$ den Wert der von dem Anforderer annehmbaren Größe angibt.

2. Betriebsmittelzuweisungsverfahren nach Anspruch 1, **dadurch gekennzeichnet, dass** die Lieferung der Anforderungsfunktion darin besteht, an das Management-System Daten zu liefern, die m Parametern entsprechen, die diese Anforderungsfunktion kennzeichnen, wobei m größer oder gleich 2 ist.

3. Betriebsmittelzuweisungsverfahren nach Anspruch 1 oder 2, **dadurch gekennzeichnet, dass** der anfordernde logische Agent (100i) seine Anforderung schickt, indem er nur zwei Parameter (m = 2) liefert, die seine Anforderungsfunktion kennzeichnen, wobei diese Parameter der Koeffizient $\alpha$, der den Wert der von dem Anforderer annehmbaren Größe angibt, und $q_{max}$, die maximale Menge, die er zu erhalten wünscht, sind, wobei diese Anforderung für mehrere aufeinander folgende Teilnahmen die gleiche sein kann.

**4.** Betriebsmittelzuweisungsverfahren nach Anspruch 1 oder 2 oder 3, **dadurch gekennzeichnet, dass** die Berechnung des Wertes der Größe p, die jeden logischen Agenten **kennzeichnet**, nach der Verarbeitung aller Anforderungen während der vorgegebenen Dauer umfasst:

- eine Berechnung des Wertes der Gesamtgröße $C_i(s)$ der Menge $a_i$, die einem anfordernden logischen Agenten i zugewiesen wird, um die Menge $a_i(s)$ zu erhalten, wenn dieser letztere die Funktion $s_i$ ausgegeben hat, was auf dem Kompensationsausschlussprinzip beruht, wobei diese Berechnung anhand der folgenden Beziehung erfolgt:

$$C_i(s) = \sum_{j \neq i} \int_{a_j^s}^{a_j^0} s_j^{-1}(p)\, dp$$

worin für den anfordernden Agenten j $a_j^s$ seine Zuweisung in Gegenwart des anfordernden Agenten i repräsentiert und $a_j^0$ seine Zuweisung bei dessen Abwesenheit repräsentiert, wobei sich die von j verschiedenen teilnehmenden Anforderer in diesem Fall die Menge $a_j^0$ zuweisen sehen, während sie in der aktuellen Situation aufgrund des Vorhandenseins von i nur $a_j^s$ haben, wobei $s_j^{-1}$ die inversen Anforderungsfunktionen der teilnehmenden anfordernden Agenten j sind.

**5.** Betriebsmittelzuweisungsverfahren nach einem der vorhergehenden Ansprüche, **dadurch gekennzeichnet, dass** das Management-System (200) ein Telekommunikationsbetriebsmittelmanagement-System ist und dass das Betriebsmittel das Durchlassband ist.

**6.** Betriebsmittelmanagement-System, mit Mitteln zum Zuweisen des Betriebsmittels an n anfordernde logische Agenten (100i) über ein Telekommunikationsnetz (300), wobei diese Mittel umfassen:

- Mittel zum Empfangen einer Anforderung, die von jedem anfordernden Agenten in Form einer Betriebsmittelanforderungsfunktion $s_i(p)$ ausgegeben werden, worin p eine variable Größe ist, wobei diese Anforderungsfunktionen im Voraus definierte, abnehmende und stetige positive Funktionen sind,
- Verarbeitungsmittel (201, 202) für alle Anforderungen, die während einer vorgegebenen Zeitdauer empfangen werden, um die jedem anfordernden Agenten zuzuweisende Betriebsmittelmenge zu bestimmen, wobei diese Verarbeitungsmittel umfassen:
- Mittel (201) zum Berechnen einer Dateneinheit, die einem Wert der Größe, die Gleichgewichtsgröße p* genannt wird, entspricht, anhand der Summe S aus n Anforderungsfunktionen $s_i(p)$,
    mittels der Beziehung: S(p* = Q),

  - worin Q die Dateneinheit bezüglich der verfügbaren Menge ist, und
  - S(p) die Gesamtanforderung ist, die der Summe aus den Anforderungen $s_i(p)$ jedes anfordernden Agenten für jeden Wert, den die Größe p annimmt, entspricht,

$$S(p) = s_1(p) + s_2(p) + ... + s_i(p) + ... + s_n(p),$$

- Mittel zum Berechnen der Dateneinheiten, die der Menge $a_i$ entsprechen, die für diesen Gleichgewichtswert p* jedem anfordernden Agenten i zuzuweisen ist, anhand seiner Anforderungsfunktion $s_i$, derart, dass:

  - $a_i = s_i(p^*)$,

- Mittel (201) zum Zuweisen entsprechender Betriebsmittelmengen und zum Aufzeichnen dieser Daten, um sie an ein Betriebssystem zu liefern,

**dadurch gekennzeichnet, dass:**

- jeder anfordernde Agent i Mittel zum Aufzeichnen einer Funktion $U'_i(q)$ umfasst; wobei jeder anfordernde Agent i, der während der vorgegebenen Zeitdauer teilnimmt, somit durch sein Interesse daran **gekennzeichnet** ist, eine Menge q des globalen Betriebsmittels Q zu erhalten, und zwar durch seine Nutzenfunktion $U_i(q)$ oder durch eine Grenznutzenfunktion $U'_i(q)$, die an die Erlangung einer zusätzlichen Einheit angepasst ist, wobei $U'_i(q)$ die Ableitung von $U_i(q)$ ist,

und Mittel umfasst, um bei jeder neuen Teilnahme die Anforderungsfunktion $s_i(p)$ zu bestimmen, indem die inverse Funktion der Funktion $U'_i(q)$ berechnet wird, wobei der anfordernde logische Agent seine Anforderung **dadurch** ausgibt, dass er diese Funktion schickt,

- wobei die Nutzenfunktion eine Polynomfunktion der folgenden Form ist:

$$U(q)=\frac{\min(q,q_{max})^*(q_{max}-0,5^*\min(q,q_{max}))}{\alpha}$$

was eine Anforderungsfunktion S(p) ergibt:
S(p) = max(0; $q_{max}$ - $\alpha$p)
wobei p der Wert der Größe ist, die der Anforderer für eine zusätzliche Betriebsmitteleinheit jenseits von q = s(p) bereit ist zu akzeptieren,
$q_{max}$ die maximale Menge ist, die er zu erlangen wünscht,
$\alpha$ den Wert der von dem Anforderer annehmbaren Größe angibt;
oder eine Funktion der folgenden Form ist:

$$U(q)=\frac{\min(q,q_{max})^*(Ln(q_{max})-Ln(\min(q,q_{max}))+1}{\alpha}$$

wobei Ln der natürliche Logarithmus ist,
was eine Anforderungsfunktion S(p) ergibt:

$$S(p) = q_{max}^*\exp(-\alpha^*p),$$

wobei p der Wert der Größe ist, die der Abnehmer für eine zusätzliche Betriebsmitteleinheit jenseits von q = s(p) zu akzeptieren bereit ist,
$q_{max}$ die maximale Menge ist, die er zu erlangen wünscht,
$\alpha$ den Wert der von dem Anforderer annehmbaren Größe angibt.

7. Betriebsmittelmanagement-System nach Anspruch 6, **dadurch gekennzeichnet, dass** die Mittel zum Zuweisen des Betriebsmittels durch einen Rechner des Server-Typs (200) verwirklicht sind, wobei der Server mit der Telekommunikationsnetz-Anlage verbunden ist, die mit den Anforderungen jener Betriebsmittel belastet ist, die zwischen den Entitäten, die sie anfordern, aufgeteilt werden sollen.

8. Betriebsmittelmanagement-System nach Anspruch 6, **dadurch gekennzeichnet, dass** die Anforderungsfunktion lediglich durch zwei Parameter **gekennzeichnet** ist, wobei die anfordernden Agenten Mittel (101) umfassen, um ein Wertepaar für die Parameter bei jeder neuen Anforderung zu wählen und es an den Server zu liefern.

9. Betriebsmittelmanagement-System nach Anspruch 6 und 7, **dadurch gekennzeichnet, dass** die anfordernden logischen Agenten (100i) durch programmierte Automaten verwirklicht sind, um die Anforderungen auszuführen und um mit dem Server einen Dialog zu führen.

10. Betriebsmittelmanagement-System nach Anspruch 6, **dadurch gekennzeichnet, dass** die Automaten (100i) durch mobile Software-Agenten gebildet sind, die im Server angeordnet sein können.

11. Betriebsmittelmanagement-System nach Anspruch 6, **dadurch gekennzeichnet, dass** das Betriebsmittel ein Telekommunikationsbetriebsmittel ist.

**Claims**

1. A method of allocating a resource between m entities or logic agents requesting the source, by means of a system (200) for managing the said resource, comprising, over a predetermined period:

   - the reception of a request sent by each requesting agent (100i) in the form of a resource request function $s_i$ (p), in which p is a variable quantity, these request functions being decreasing and continuous positive predefined functions,
   - the processing of all the requests received during the predetermined period in order to determine the quantity of resources to be allocated to each requesting agent, this processing comprising the following steps:
   - the calculation of a data item corresponding to a quantity known as the equilibrium quantity p* from the sum S of the n request functions $s_i(p)$,

     by means of the equation: S(p*)=Q,

   - in which Q is the available quantity data item, and
   - S(p) is the total request corresponding to the sum of the request $s_1(p)$ of each agent for each value which the quantity p can take,

$$S(p)= s_1(p) +s_2(p) +...+s_1(p) +...s_n(p),$$

   - the calculation of the data corresponding to the quantity $a_i$ to be allocated for this equilibrium quantity p* to each agent i from its request function $s_i$ such that:

   - $a_i = s_i (p^*)$,
   - the use by the management system of the data obtained by the calculation in order to allocate the corresponding resource quantities and the recording of these data in order to supply them to an operating system;

   - **characterised in that** it consists of:

   - programming a function $U'_i (q)$ in the requesting logic agent i,
   - each requesting agent i participating during the predetermined period being thus **characterised by** its interest for obtaining a quantity q of the global resource Q, by a utility function $U'_I(q)$ or by a marginal utility function $U'_I(q)$ granted for the acquisition of an additional unit, $U'_I(q)$ being the derivative of $U_i(q)$,

     and, at each new participation:

   - determining the request function $s_i (p)$ by calculating the reciprocal function of the function $U'_I(q)$, the requesting logic agent issuing its request by sending this function,

     and in that:

   the utility function is a polynomial function of the form:

$$U(q)=\frac{\min(q,q_{max})*(q_{max}-0.5*\min(q,q_{max}))}{\alpha}$$

   which gives a request function S(p)

$$(S(p) = \max(0 ; q_{max}- \alpha p)$$

   where p is the value of the quantity that the requester is ready to accept for an additional resource unit beyond q=s(p),

   $q_{max}$ the maximum quantity which it wishes to acquire,

$\alpha$ indicating the value of the quantity acceptable to the requester;
Or a function of the form:

$$U(q) = \frac{\min(q, q_{max})*(Ln(q_{max})-Ln(\min(q, q_{max}))+1}{\alpha}$$

Ln is the Naperian logarithm,
which gives a request function S(p)

$$S(p) = q_{max}*\exp(-\alpha*p)$$

where p is the value of the quantity that the requester is ready to accept for an additional resource unit beyond q=s(p),

$q_{max}$ the maximum quantity that he wishes to acquire,
$\alpha$ indicating the value of the quantity acceptable to the requester.

2. A method of allocating a resource according to Claim 1, **characterised in that** the supply of the request function consists of supplying to the management system data corresponding to m parameters **characterising** this request function, m being greater than or equal to 2.

3. A method of allocating a resource according to Claim 1 or 2, **characterised in that** the requesting logic agent (100i), when sending its requests, supplies only two parameters (m=2) **characterising** its request function, these parameters being the coefficient $\alpha$ indicating the value of the quantity acceptable to the requester and $q_{max}$ the maximum quantity that he wishes to acquire, this request may be the same for several successive participations.

4. A method of allocating a resource according to Claim 1 or 2 or 3, **characterised in that** the calculation of the value of the quantity p **characterising** each logic agent at the end of the processing of all the requests over the predetermined period comprises:

- a calculation of the value of the total magnitude $C_i(s)$ of the quantity $a_i$ allocated to a requesting logic agent I for obtaining the quantity $a_i(s)$ when it has sent the function $s_i$, based on the principle of compensation exclusion, this calculation being made using the following equation:

$$C_i(s) = \sum_{j \neq i} \int_{a_j^s}^{a_j^0} s_j^{-1}(p)dp$$

in which, for the requesting agent j, $a_j^s$ represents its allocation in the presence of the requesting agent I and $a_j^0$ its allocation in its absence, the participating agents other than j are in this case allocated the quantity $a_j^0$ whereas they have only $a_j^s$ in the current situation because of the presence of I, $s_j^{-1}$ being the reciprocals of the request functions of the participating requesting agents j.

5. A method of allocating a resource according to any one of the preceding claims, **characterised in that** the management system (200) is a telecommunication resource management system and **in that** resource is the bandwidth.

6. A system for managing a resource comprising means of allocating the said resource between n requesting logic agents (100i), through a telecommunication network (300), these means comprising:

- means of receiving a request sent by each requesting agent in the form of a resource request function $s_i(p)$, in which p is a variable quantity, these request functions being decreasing and continuous positive predefined functions,
- means (201, 202) of processing all the requests received during a predetermined period, in order to determine the quantity of resources to be allocated to each requesting agent, these processing means comprising:

- means (201) of calculating a data item corresponding to a value of the quantity referred to as the equilibrium quantity p* from the sum s of the n request functions $s_i(p)$,

  by means of the equation: $S(p*)=Q$,

- in which Q is the available quantity data item, and
- S(p) is the total request corresponding to the sum of the requests $s_1(p)$ of each requesting agent for each value taken by the quantity p,

$$S(p)= s_1(p) +s_2(p) +...+s_1(p) +...s_n(p),$$

- means of calculating the data corresponding to the quantity $a_i$ to be allocated for this equilibrium quantity p* to each requesting agent i from its request function $s_i$ such that:

  - $a_i = s_i (p*)$,
  - means (201) of allocating the corresponding quantities of resources and recording these data in order supply them to an operating system;

  **characterised in that**:

- each requesting agent i comprises means of recording a function $U'_I(q)$; each requesting agent i participating during the predetermined period being thus **characterised by** its interest for obtaining a quantity q of the global resource Q, through its utility function $U'_I(q)$ or through a marginal utility function $U'_I(q)$ granted for the acquisition of an additional unit, $U'_I(q)$ being the derivative of $U_i(q)$,

  and means for determining the request function $s_i (p)$ of each new participation by calculating the function which is the reciprocal of the function $U'_I(q)$, the requesting logic agents issuing its request by sending this function;

- the utility function being a polynomial function of the form:

$$U(q) = \frac{\min(q,q_{max})*(q_{max}-0{,}5*\min(q,q_{max}))}{\alpha}$$

  which gives a request function S(p)
  ($S(p) = \max(0 ; q_{max}- \alpha p)$
  where p is the value of the quantity that the requester is ready to accept for an additional resource unit beyond q=s(p),
  $q_{max}$ the maximum quantity which it wishes to acquire,
  $\alpha$ indicating the value of the quantity acceptable to the requester;
  Or a function of the form:

$$U(q) = \frac{\min(q,q_{max})*(Ln(q_{max})-Ln(\min(q,q_{max}))+1}{\alpha}$$

  Ln is the Naperian logarithm,
  which gives a request function S(p)

$$S(p)=q_{max}*\exp(-\alpha*p)$$

  where p is the value of the quantity that the requester is ready to accept for an additional resource unit beyond q=s(p),
  $q_{max}$ the maximum quantity that he wishes to acquire,

$\alpha$ indicating the value of the quantity acceptable to the requester.

7. A system for managing a resource according to Claim 6, **characterised in that** the means of allocating the resource are implemented by a computer of the server type (200) programmed for this purpose and, the said server being connected to the equipment on the telecommunication network in charge of the resource requests which it is sought to share between the entities which make the request.

8. A system for managing a resource according to Claim 6, **characterised in that**, the request function being **characterised** solely by two parameters, the requesting agents comprise means (101) for choosing a pair of values of the parameters and each new request and supplying it to the server.

9. A system for managing a resource according to Claims 6 and 7, **characterised in that** the requesting logic agents (100i) are produced by automatic controllers programmed to make the request and to dialogue with the server.

10. A system for a managing a resource according to Claim 6, **characterised in that** the automatic controllers (100i) consist of movable software agents able to be placed in the server.

11. A system for managing a resource according to Claim 6, **characterised in that** the resource is a telecommunication resource.

Fig. 1A

Fig. 1B

3 exemples de fonction d'utilité
pour un même $q_{max}$

Fig. 2A

les 3 utilités marginales
correspondantes

Fig. 2B

Fig. 2C

**Fig. 2D**

**Fig. 2E**

**Fig. 3**

**Fig. 4**

**1i**

**100i**

**110**

Acheteur   Acheteur

**201**

Processeur

**110**

E/S

**203**

**210**

Mémoire

**204**

**200**

**202**

**200**

**300**

réseau

Serveur
médiateur   **210**

<u>**Fig. 5**</u>

Processeur
<u>101</u>

E/S
<u>104</u>

**110**

**103**

Mémoire
<u>102</u>

**100i**

<u>**Fig. 6**</u>